# EUROPÄISCHE PATENTSCHRIFT

(11) **EP 3 574 041 B1**
(45) Veröffentlichungstag und Bekanntmachung des Hinweises auf die Patenterteilung: **27.01.2021**
(21) Anmeldenummer: 18713807.8
(22) Anmeldetag: 07.03.2018
(51) Int. Cl.: C08J 5/04, B29C 70/22, C09K 21/12, C09K 21/14, B29C 37/00, B61D 17/00

(54) **FEUERHEMMEND AUSGEFÜHRTES FASERVERBUNDBAUTEIL**
FIRE-PROOF FIBRE-REINFORCED COMPONENT
ELEMENT EN FIBRE COMPOSITE IGNIFUGE

(30) Priorität: 24.03.2017 DE 102017204982
(43) Veröffentlichungstag der Anmeldung: 04.12.2019
(73) Patentinhaber: Siemens Mobility GmbH, 81739 München (DE)
(72) Erfinder: KARL, Michael, 91056 Erlangen (DE)
(86) Internationale Anmeldenummer: PCT/EP2018/055562
(87) Internationale Veröffentlichungsnummer: WO 2018/172072

(56) Entgegenhaltungen:
- WO-A1-98/13407
- DE-A1- 4 308 187
- DE-A1-102009 037 631
- SASCHA ENDE ET AL: "Modular, leicht, sicher: Faserverbund- Kunststoffe im Schienenverkehr // Modular, Lightweight, Secure: Fibre Reinforced Plastics in Railway Transportation", ZEVRAIL - GLASERS ANNALEN, GEORG SIEMENS VERLAG, BERLIN, DE, Bd. 138, Nr. 3, 1. März 2014 (2014-03-01), Seiten 68-74, XP001587600, ISSN: 1618-8330
- BOURBON M ET AL: "LES COMPOSITES: NOUVELLE PERSPECTIVE POUR LE MATERIEL FERROVIAIRE", REVUE GÉNÉRALE DES CHEMINS DE FER : RCGF, HC ÉDITIONS, FR, Nr. 12, 1. Dezember 1991 (1991-12-01), Seiten 49-54, XP000247725, ISSN: 0035-3183
- REIF G ET AL: "KONSTRUKTION, ANALYSE UND PRODUKTION VON SCHURZENKLAPPEN FUR HOCHGESCHWINDIGKEITSZUGE", ZEITSCHRIFT FUR EISENBAHNWESEN UND VERKEHRSTECHNIK. DIE EISENBAHNTECHNIK + GLASERS ANNALEN, GEORG SIEMENS VERLAGSBUCHHANDLUNG. BERLIN, DE, Bd. 114, Nr. 3, 1. März 1990 (1990-03-01), Seiten 87-93, XP000113456, ISSN: 0941-0589
- -: "Brandzertifikate - Certificates of flame resistant systems", , 1. Februar 2015 (2015-02-01), XP055482416, CH-8956 KILLWANGEN Gefunden im Internet: URL:http://www.madercomposites.com/name/Ad min/doc/MderCompositesFSTCertificatesFeb20 15.pdf [gefunden am 2018-06-08]
- ARTURO HALE ET AL: "DSC and 13C-NMR studies of the imidazole-accelerated reaction between epoxides and phenols", JOURNAL OF APPLIED POLYMER SCIENCE, Bd. 38, Nr. 7, 5. Oktober 1989 (1989-10-05), Seiten 1253-1269, XP055482514, ISSN: 0021-8995, DOI: 10.1002/app.1989.070380706

## Beschreibung

### Faserverbundbauteil

Die Erfindung bezieht sich auf ein äußeres Faserverbundbauteil für ein Fahrzeug, insbesondere Schienenfahrzeug, wobei das Faserverbundbauteil dünnwandig ausgebildet und auf Basis eines Kunststoffharzes, dem ein Brandschutzadditiv zugesetzt ist, hergestellt ist, sowie auf ein Verfahren zur Herstellung eines solchen Faserverbundbauteils.

Aus der WO 98/13407 A1 ist ein Faserverbundbauteil nach dem Oberbegriff von Anspruch 1 bekannt. Offenbart wird insbesondere eine Epoxid-Schicht, die Faserverstärkt ist, wobei wahlweise Glasfaser- oder Kohlenstofffasermaterial einsetzbar sein soll.

Faserverbundbauteile, die beispielsweise auch als äußere Verkleidungsbauteile ausgeführt sein können, werden im Schienenfahrzeugverkehr mit gefüllten Polyester- oder Phenolharzen realisiert. Dabei sind brandschutztechnische Normen einzuhalten, wie sie beispielsweise in der EN 45545-2 HL3 niedergelegt sind.

Bei dem Material "Polyester" wird der Brandschutz über nicht gelöste Additive realisiert. Diese Stoffe sind nicht chemisch gelöst. Daraus ergibt sich der Nachteil, dass ein vergleichsweise kostengünstiges Infusionsverfahren nicht oder nur schlecht zum Einsatz gebracht werden kann. Beim Befüllen filtriert die Faserverstärkung den Kunststoff, so dass am Ende des Fließwegs kein Brandschutzadditiv mehr vorhanden ist. Die Brandschutzadditive wirken intumeszierend. Mechanisch wirken sich die Additive negativ aus.

Phenolharze erfüllen sehr hohe Anforderungen an den Brandschutz. Sie sind jedoch in der Verarbeitung und hinsichtlich ihrer mechanischen Eigenschaften problematisch. Beim Vernetzen gast der Werkstoff aus. Poren lassen sich nicht vermeiden und müssen nachgearbeitet werden.

Ausgehend hiervon liegt der Erfindung die Aufgabe zugrunde, ein Faserverbundteil zum Einsatz in der Fahrzeugtechnik anzugeben, das einschlägigen Brandschutznormen genügt und verbesserte mechanische Eigenschaften aufweist, sowie ein Verfahren zu dessen Herstellung anzugeben.

Diese Aufgabe wird bei dem eingangs genannten Faserverbundbauteil dadurch gelöst, dass das Faserverbundbauteil eine Epoxidharz-Schicht aufweist, in die eine Mehrzahl Glasfasermatten eingebettet ist, die in Dickenrichtung der Epoxidharz-Schicht stapelförmig übereinander angeordnet ist, und das Brandschutzadditiv von einem Phosphor enthaltenden Prepolymer gebildet ist, das mit dem Epoxidharz chemisch reaktiv ist, wobei die Epoxidharz-Schicht zusätzlich wenigstens zwei Kohlenstofffasermatten aufweist.

Ein Faserverbundbauteil auf Basis von Epoxidharz zeichnet sich durch günstige mechanische Eigenschaften aus, was beispielsweise die Bearbeitbarkeit und Verwendbarkeit als äußeres Verkleidungsbauteil insbesondere im Fahrzeugbau angeht. Der erforderliche Brandschutz wird durch das Brandschutzadditiv gewährleistet, bei dem es sich beispielsweise um das Produkt "Struktol® XP3760" handeln kann. Dieses Prepolymer setzt beim Beflammen ein inertes Gas frei.

Bevorzugt ist ein Gemisch aus dem Epoxidharz und dem Brandschutzadditiv wie folgt zusammengesetzt:
Epoxidharz 20-80 Gew.-%, Brandschutzadditiv 20-80 Gew.-%, wobei das Epoxidharz 15-25 Gew.-% an Härter enthält. Beispiele für das Epoxidharz sind Nan Ya® NPGF170, Epilox® F17-00 oder
Araldit® GY282. Als Härter ist Lonzacure® DETDA 80 LC einsetzbar.

Die Epoxidharz-Schicht weist zusätzlich wenigstens zwei Kohlenstofffasermatten auf. Diese Kohlenstofffasermatten haben eine erheblich höhere Wärmeleitfähigkeit als Glasfasermatten und können daher zur Wärmeabfuhr innerhalb der Epoxidharz-Schicht dienen. Dabei sind die wenigstens zwei Kohlenstofffasermatten in Dickenrichtung der Epoxidharz-Schicht bevorzugt jeweils außen auf die Mehrzahl Glasfasermatten aufgebracht, so dass die Kohlenstofffasermatten in einander gegenüberliegenden Oberflächenbereichen der Epoxidharz-Schicht liegen. Diese Anordnung der vorgesehenen Kohlenstofffasermatten unterstützt einen Wärmeaustausch mit einer äußeren Umgebung des Faserverbundbauteils. Die sehr hohe Wärmeleitfähigkeit leitet Hitze sehr schnell ab.

Die Epoxidharz-Schicht kann wenigstens eine weitere, zur abschnittsweisen Verstärkung des Faserverbundbauteils vorgesehene Glasfasermatte aufweisen, die außen auf eine der wenigstens zwei Kohlenstofffasermatten aufgebracht ist. Wenn beispielsweise an das Faserverbundbauteil ein weiteres Bauteil anzubinden ist, sorgt eine solche Verstärkung für die erforderliche Tragestabilität des Faserverbundbauteils.

Bevorzugt beträgt eine Verbunddicke der Epoxidharz-Schicht mit eingebetteten Glas- und Kohlenstofffasermatten wenigstens 1mm. Davon ausgehend bewirkt eine Zunahme der Verbunddicke eine höhere mechanische Stabilität des Faserverbundbauteils.

Auf wenigstens einer Seite der Epoxidharz-Schicht kann eine Brandschutz-Gelcoat-Schicht angeordnet sein. Diese wird bevorzugt intumeszierend ausgeführt sein.

Die Brandschutz-Gelcoat-Schicht ist bevorzugt aus dem Material H07® hergestellt und kann derart eingefärbt sein, dass eine Anpassung an benachbarte Komponenten des Faserverbundbauteils gegeben ist.

Die Epoxidharz-Schicht kann bevorzugt einen Anteil von wenigstens 40 Vol.-% an Glas- und/oder Kohlestofffasern aufweisen. Dieser hohe Volumenanteil an Fasermaterial wirkt ebenfalls einem Abtropfen bei dem Faserverbundbauteil entgegen, wenn es Wärme ausgesetzt ist.

Die oben genannte Aufgabe wird hinsichtlich des Verfahrens gelöst durch ein Verfahren zur Herstellung eines Faserverbundbauteils, mit den Schritten:
- Anordnen einer Mehrzahl stapelförmig übereinander angeordneter Glasfasermatten in einem Formwerkzeug,
- Einbringen eines Gemischs aus Epoxidharz, Härter und einem Brandschutzadditiv, das von einem Phosphor enthaltenden Prepolymer gebildet und mit dem Epoxidharz chemisch reaktiv ist, in das Formwerkzeug,
- Aushärtenlassen der Epoxidharz-Schicht unter Beaufschlagung mit Wärme,
- wobei sowohl vor als auch nach dem Einbringen der Mehrzahl stapelförmig übereinander angeordneter Glasfasermatten jeweils wenigstens eine Kohlenstofffasermatte in das Formwerkzeug eingebracht wird.

Ein solches Verfahren ist geeignet zur Herstellung des Faserverbundbauteils nach einem der Ansprüche 1 bis 7.

Insbesondere kann bei der Herstellung des Faserverbundbauteils die Epoxidharz-Schicht für eine Zeitdauer von wenigstens zwei Stunden auf eine Prozesstemperatur von wenigstens 120°C, bevorzugt wenigstens 135°C, gebracht werden. Eine derart hohe Prozesstemperatur bewirkt eine hohe Vernetzung innerhalb der Epoxidharz-Schicht. Dies wiederum führt zu einer hohen Glasübergangstemperatur T_{G} für die Epoxidharz-Schicht. Diese Eigenschaft wirkt ebenfalls einem Abtropfen bei dem Faserverbundbauteil entgegen, wenn dieses hohen Temperaturen ausgesetzt wird.

Bei dem Verfahren wird sowohl vor als auch nach dem Einbringen der Mehrzahl stapelförmig übereinander angeordneten Glasfasermatten jeweils wenigstens eine Kohlenstofffasermatte in das Formwerkzeug eingebracht. Dies fördert eine Wärmeabfuhr für das Faserverbundbauteil im Brandfall. Ausführungsbeispiele der Erfindung werden nachstehend anhand der folgenden Beschreibung näher erläutert.

Ein Faserverbundbauteil, das beispielsweise als Seitenklappe eines Schienenfahrzeugs eingesetzt werden kann, weist eine

Epoxidharz-Schicht auf, in die eine Mehrzahl Glasfasermatten eingebettet ist. Auf der nach außen zeigenden Seite der Epoxidharz-Schicht ist eine Gelcoat-Schicht auf Polyester- oder Epoxidbasis vorgesehen, die intumeszierend ausgebildet ist.

Im Einzelnen ist der Lagenaufbau des Faserverbundbauteils in einem ersten Ausführungsbeispiel wie folgt:

| **Lage** | **Faser** | **Gewicht [g/m²]** | **Winkel [°]** | **Dicke [mm]** |
|---|---|---|---|---|
| - | H07 | - | - | 1,000 |
| 1 | C T300 Twill 2/2 12k | 400 | 0/90° | 0,477 |
| 2 | E-Glas 2/2 | 390 | 0/90° | 0,376 |
| 3 | E-Glas 2/2 | 390 | 40/130° | 0,376 |
| 4 | E-Glas 2/2 | 390 | 0/90° | 0,376 |
| 5 | E-Glas 2/2 | 390 | 0/90° | 0,376 |
| 6 | E-Glas 2/2 | 390 | 40/130° | 0,376 |
| 7 | E-Glas 2/2 | 390 | 0/90° | 0,376 |
| 8 | E-Glas 2/2 | 390 | 0/90° | 0,376 |
| 9 | E-Glas 2/2 | 390 | 0/90° | 0,376 |
| 10 | C T300 Twill 2/2 12k | 400 | 0/90° | 0,477 |

Dabei ist "C T300 Twill 2/2 12k" eine Kohlenstofffaser des Typs T300, die als Gewebe ausgeführt ist, während "E-Glas 2/2" eine als Gewebe ausgeführte Glasfaser bedeutet.

In einem zweiten Ausführungsbeispiel ist der Lagenaufbau wie folgt:

| Lage | Faser | Gewicht [g/m²] | Winkel [°] | Dicke [mm] |
|---|---|---|---|---|
| - | H07 Brandschutz_Gecoat | 600 | - | 1,000 |
| 1 | Carbon 2/2 T700 | 417 | 0/90° | 0,425 |
| 2 | E-Glas biaxial | 975 | 0/90° | 0,833 |
| 3 | E-Glas quadraxial | 821 | 0/45/90/- 45° | 0,702 |
| 4 | E-Glas quadraxial | 821 | - 45/90/45/0° | 0,702 |
| 5 | E-Glas biaxial | 975 | 90/0° | 0,833 |
| 6 | Carbon 2/2 T700 | 400 | 90/0° | 0,425 |

In beiden Ausführungsbeispielen beträgt eine Gesamtdicke des Faserverbundbauteils 5mm.

Bei der Lage "H07" handelt es sich um die Gelcoat-Schicht, die als ein mit einem intumeszierenden Brandschutzadditiv gefülltes Polyesterharz vorliegt. Die Lagen 1 und 10 werden jeweils von Kohlenstofffasermatten gebildet, zwischen denen mit den Lagen 2 bis 9 acht Glasfasermatten liegen. Die bezogen auf die Glasfasermatten jeweils außen liegenden Kohlenstofffasermatten bewirken eine Wärmeabfuhr bei dem Faserverbundbauteil, wenn dieses beispielsweise im Brandfalle einer hohen Temperatur ausgesetzt ist.

Aufgrund der gegebenen Lagenstruktur ist das Faserverbundbauteil allgemein dünnwandig, kann jedoch beispielsweise zur Anpassung an eine Außenhautgeometrie eines Schienenfahrzeugs auch leicht gekrümmt sein. Insbesondere ist es möglich, dass das Faserverbundbauteil einen beispielsweise rechtwinkligen Flächenabschnitt aufweist, der mit einem Lochmuster versehen ist. Solche Flächenabschnitte können verstärkt sein. Dazu ist es möglich, dass auf die der Gelcoat-Schicht gegenüberliegenden äußeren KohlenstofffaserLage eine oder mehrere weitere Glasfasermatten aufgebracht sind, die von ihrer Struktur her den Lagen 2 bis 8 aus dem vorstehenden Beispiel entsprechen können. Sofern Oberflächenabschnitte des Faserverbundbauteils zum Tragen weiterer Komponenten, beispielsweise einer C-Schiene, vorgesehen sind, sind auch in solchen Abschnitten Verstärkungen möglich.

In den vorliegenden Ausführungsbeispielen ist die Epoxidharz-Schicht aus einem Gemisch von 25 Gew.-% Araldit® GY282 und 75 Gew.-% Struktol® XP 3760 zusammengesetzt. Als Härter für das Araldit® GY282 kommt Lonzacure® DETDH 80 LC zum Einsatz, und zwar in einem Anteil von 19,3 Gew.-%, bezogen auf das Epoxidharz-Härter-Gemisch. Das Brandschutzadditiv Struktol® XP 3760 ist aus einem Phosphor enthaltenden Prepolymer (Gruppe Roter Phosphor) gebildet, das mit dem Epoxidharz chemisch reaktiv ist. Insbesondere schützt dieser Stoff die umgebende Matrix, d.h. das Epoxidharz, während einer thermischen Zersetzung, z. B. bei 400°C, durch Bildung von Phosphormonoxid, welches als Radikalfänger in einer Inertphase den Gehalt an OH⁺ und H⁺ deutlich reduziert und somit flammhemmend wirkt.

Die oben erläuterten Ausführungsbeispiele für ein Faserverbundbauteil können in einem Vakuuminfusionsverfahren oder RTM-Verfahren (Resin Transfer Moulding) hergestellt werden. Bei beiden Verfahren handelt es sich um Infusionsverfahren. Beim Vakuuminfusionsverfahren wird das Epoxidharz mittels Unterdruck in die Kavität eines Formwerkzeugs gesaugt. Bei dem RTM-Verfahren wird das Epoxidharz injiziert (hoher Druck, daher kurze Prozesszeit). Das RTM-Verfahren ist aufwendiger was die Werkzeuge betrifft und für mittlere bis große Stückzahlen geeignet. Die Vakuuminfusion ist bereits für Prototypen und kleinere Stückzahlen rentabel. Nachfolgend wird mehr im Detail ein Verfahren zur Herstellung der Faserverbundbauteile nach dem Vakuuminfusionsverfahren beschrieben:
Zunächst wird ein flach ausgebildetes Formwerkzeug bereitgestellt, welches zur äußeren, typischer Weise rechtwinklingen und plattenförmigen Formgebung des Faserverbundbauteils ausgeführt ist.

In das Formwerkzeug wird zunächst die Gelcoat-Schicht eingebracht. Diese geliert dann über einen Zeitraum von beispielsweise 1 Stunde aus und wird teilweise fest, härtet aber nicht vollständig aus. Die Gelcoat-Schicht geliert an, behält aber einen Tack, d.h. ihre Oberfläche bleibt klebrig. Dadurch geht das injizierte Epoxidharz mit Brandschutz-Gelcoat-Schicht eine Verbindung ein.

Im Anschluss daran wird auf die Brandschutz-Gelcoat-Schicht eine der oben erläuterten Lagenstruktur aus zwei Kohlenstofffasermatten und Glasfasermatten, ggf. mit (abschnittsweiser) Verstärkung mittels wenigstens einer weiteren Glasfasermatte gegenüber der Gelcoat-Schicht, in der gewünschten Reihenfolge aufgebracht. Daraufhin wird per Unterdruck ein geeignetes Gemisch aus dem Epoxidharz, hier Araldit®, und dem Brandschutzadditiv, hier Struktol®, in das Formwerkzeug verbracht. Die Epoxidharz-Schicht, die als Gemisch aus Epoxidharz und Brandschutzadditiv vorliegt, wird sodann bei einer Aushärtetemperatur von 140°C wärmebehandelt. Dabei ergibt sich die fertige, verfestigte Epoxidharz-Schicht, die einen hohen Faservolumenanteil (Glasfasern plus Kohlestofffasern) von beispielsweise 40 Vol.-% enthält. Zudem besitzt die Epoxidharz-Schicht eine Glasübergangstemperatur T_{G} von wenigstens 100°C. Der hohe Faservolumenanteil und die ebenfalls hohe Glasübergangstemperatur verhindern ein Abtropfen und damit eine Verformung des Faserverbundbauteils im Brandfalle.

Die zum Einsatz kommende Brandschutz-Gelcoat-Schicht wirkt aufgrund ihrer Füllung mit einem intumeszierenden Material zudem vorteilhaft mit dem Brandschutzadditiv in der Epoxidharz-Schicht zusammen. Durch das Aufschäumen der Gelcoat-Schicht wird die inerte Wirkung des Brandschutzadditivs verbessert, so dass das sich bildende Gas länger an der Epoxidharz-Schicht verbleibt und nicht durch konvektive Vorgänge entfernt wird. Insgesamt ergibt sich eine deutliche Erhöhung der Konzentration an inertem Gas an der Oberfläche des Faserverbundbauteils. Bei Einsatz des Faserverbundbauteils als Seitenklappe bei einem Schienenfahrzeug kann die Farbgebung der Gelcoat-Schicht derjenigen der umgebenden Außenhaut des Schienenfahrzeugs entsprechen.

## Patentansprüche

1. Faserverbundbauteil für ein Fahrzeug, wobei das Faserverbundbauteil dünnwandig ausgebildet und auf Basis eines Kunststoffharzes, dem ein Brandschutzadditiv zugesetzt ist, hergestellt ist, wobei das Faserverbundbauteil eine Epoxidharz-Schicht aufweist, in die eine Mehrzahl Glasfasermatten eingebettet ist, die in Dickenrichtung der Epoxidharz-Schicht stapelförmig übereinander angeordnet ist, und das Brandschutzadditiv von einem Phosphor enthaltenden Prepolymer gebildet ist, das mit dem Epoxidharz chemisch reaktiv ist,
**dadurch gekennzeichnet, dass**
die Epoxidharz-Schicht zusätzlich wenigstens zwei Kohlenstofffasermatten aufweist.

2. Faserverbundbauteil nach Anspruch 1,
**dadurch gekennzeichnet, dass**
ein Gemisch aus dem Epoxidharz und dem Brandschutzadditiv wie folgt zusammengesetzt ist:
Epoxidharz 20 - 80 Gew.-%,
Brandschutzadditiv 20 - 80 Gew.-%,
wobei das Epoxidharz 15 -25 Gew.-% an Härter enthält.

3. Faserverbundbauteil nach Anspruch 1 oder 2,
**dadurch gekennzeichnet, dass**
die wenigstens zwei Kohlenstofffasermatten in Dickenrichtung der Epoxidharz-Schicht jeweils außen auf die Mehrzahl Glasfasermatten aufgebracht sind, so dass die Kohlenstofffasermatten in einander gegenüber liegenden Oberflächenbereichen der Epoxidharz-Schicht liegen.

4. Faserverbundbauteil nach Anspruch 3,
**dadurch gekennzeichnet, dass**
die Epoxidharz-Schicht wenigstens eine weitere, zur abschnittsweisen Verstärkung des Faserverbundbauteils vorgesehene Glasfasermatte aufweist, die außen auf eine der wenigstens zwei Kohlenstofffasermatten aufgebracht ist.

5. Faserverbundbauteil nach einem der Ansprüche 1 bis 4, **dadurch gekennzeichnet, dass**
eine Verbunddicke der Epoxidharz-Schicht wenigstens 1mm beträgt.

6. Faserverbundbauteil nach einem der Ansprüche 1 bis 5, **dadurch gekennzeichnet, dass**
auf wenigstens einer Seite der Epoxidharz-Schicht eine Brandschutz-Gelcoat-Schicht angeordnet ist.

7. Faserverbundbauteil nach einem der Ansprüche 1 bis 6, **dadurch gekennzeichnet, dass**
die Epoxidharz-Schicht einen Anteil von wenigstens 40Vol.-% an Glas- und/oder Kohlenstofffasern ausweist.

8. Verfahren zur Herstellung eines Faserverbundbauteils, mit den Schritten:
- Anordnen einer Mehrzahl stapelförmig übereinander angeordneter Glasfasermatten in einem Formwerkzeug,
- Einbringen eines Gemischs aus Epoxidharz, Härter und einem Brandschutzadditiv, das von einem Phosphor enthaltenden Prepolymer gebildet und mit dem Epoxidharz chemisch reaktiv ist, in das Formwerkzeug,
- Aushärtenlassen der Epoxidharz-Schicht unter Beaufschlagung mit Wärme und
- wobei sowohl vor als auch nach dem Einbringen der Mehrzahl stapelförmig übereinander angeordneter Glasfasermatten jeweils wenigstens eine Kohlenstofffasermatte in das Formwerkzeug eingebracht wird.

9. Verfahren nach Anspruch 8,
bei dem die Epoxidharz-Schicht für eine Zeitdauer von wenigstens zwei Stunden auf eine Prozesstemperatur von wenigstens 120°C gebracht wird.

## Claims

1. Fibre-composite component which is intended for a vehicle, where the fibre-composite component is of thin-walled configuration and which is based on a synthetic resin to which a fire-protection additive has been added, where the fibre-composite component has an epoxy resin layer into which a plurality of glass fibre mats has been embedded and which is arranged in the form of a mutually superposed stack in the thickness direction of the epoxy resin layer, and the fire-protection additive is composed of a phosphorus-containing prepolymer which is chemically reactive towards the epoxy resin,
**characterized in that**
the epoxy resin layer additionally comprises at least two carbon fibre mats.

2. Fibre-composite component according to Claim 1, **characterized in that**
a mixture of the epoxy resin with the fibre-protection additive has the following composition:
epoxy resin 20-80% by weight,
fire-protection additive 20-80% by weight,
where the epoxy resin comprises 15-25% by weight of hardener.

3. Fibre-composite component according to Claim 1 or 2, **characterized in that**
the at least two carbon fibre mats have respectively been applied externally to the plurality of glass fibre mats in thickness direction of the epoxy resin layer, in a manner such that the carbon fibre mats are in surface regions of the epoxy resin layer that are opposite to one another.

4. Fibre-composite component according to Claim 3, **characterized in that**
the epoxy resin layer has at least one further glass fibre mat which is provided for the sectional reinforcement of the fibre-composite component and which has been applied externally to one of the at least two carbon fibre mats.

5. Fibre-composite component according to any of Claims 1 to 4,
**characterized in that**
the thickness of the epoxy resin layer of the composite is at least 1 mm.

6. Fibre-composite component according to any of Claims 1 to 5,
**characterized in that**
arranged on at least one side of the epoxy resin layer there is a fire-protection gelcoat layer.

7. Fibre-composite component according to any of Claims 1 to 6,
**characterized in that**
the proportion of glass fibres and/or carbon fibres in the epoxy resin layer is at least 40% by volume.

8. Process for the production of a fibre-composite component with the following steps:
- arrangement, in a mould, of a plurality of glass fibre mats arranged in the form of a mutually superposed stack,
- introduction, into the mould, of a mixture of epoxy resin and hardener with a fire-protection additive which is composed of a phosphorus-containing prepolymer and is chemically reactive towards the epoxy resin,
- allowing the epoxy resin layer to harden with heat-treatment and
- where both before and after the introduction of the plurality of glass fibre mats arranged in the form of a mutually superposed stack at least one carbon fibre mat is respectively introduced into the mould.

9. Process according to Claim 8,
in which the epoxy resin layer is brought to a process temperature of at least 120°C for a period of at least two hours.

## Revendications

1. Elément composite en fibre pour un véhicule, l'élément composite en fibre étant constitué à paroi mince et étant fabriqué sur la base d'une résine de matière plastique, à laquelle est ajouté un additif ignifuge, le composant composite à fibre ayant une couche de résine époxyde, dans laquelle sont incorporées une pluralité de mats de fibre de verre, qui sont superposées en forme de pile dans la direction d'épaisseur de la couche de résine époxyde et l'additif ignifuge est formé d'un prépolymère contenant du phosphore, qui est réactif chimiquement sur la résine époxyde, **caractérisé en ce que**
la couche de résine époxyde a, en outre, au moins deux mats en fibre de carbone.

2. Elément composite à fibre suivant la revendication 1, **caractérisé en ce qu'**
un mélange de la résine époxyde et de l'additif ignifuge est composé de la manière suivante :
résine époxyde de 20 à 80% en poids,
additif ignifuge de 20 à 80% en poids,
la résine époxyde contenant de 15 à 25% en poids de durcisseur.

3. Elément composite à fibre suivant la revendication 1 ou 2, **caractérisé en ce que**
les deux mats en fibre de carbone sont, dans la direction d'épaisseur de la couche de la résine époxyde, déposées, respectivement, à l'extérieur sur la pluralité de mats en fibre de verre, de manière à ce que les mats en fibre de carbone soient dans des régions de surface opposées l'une à l'autre de la couche de résine époxyde.

4. Elément composite à fibre suivant la revendication 3, **caractérisé en ce que**
la couche de résine époxyde a au moins un autre mat en fibre de verre prévu pour le renforcement, par endroits, de l'élément composite en fibre, qui est déposé à l'extérieur sur l'un des au moins deux mats en fibre de carbone.

5. Elément composite à fibre suivant l'une des revendications 1 à 4,
**caractérisé en ce qu'**
une épaisseur composite de la couche de résine époxyde est d'au moins 1mm.

6. Elément composite à fibre suivant l'une des revendications 1 à 5,
**caractérisé en ce qu'**
une couche d'enduit gélifiée ignifuge est mise sur au moins une face de la couche de résine époxyde.

7. Elément composite à fibre suivant l'une des revendications 1 à 6,
**caractérisé en ce que**
la couche de résine époxyde a une proportion d'au moins 40% en volume de fibre de verre et/ou de carbone.

8. Procédé de fabrication d'un élément composite en fibre, comprenant les stades :
- on met une pluralité de mats de fibre de verre, disposés les uns sur les autres sous la forme d'une pile dans un outil de moulage,
- on introduit un mélange de résigne époxyde, de durcisseur et d'un additif ignifuge, qui est formé d'un prépolymère contenant du phosphore et qui est réactif chimiquement sur la résine époxyde, dans l'outil de moulage,
- on laisse durcir la couche de résine époxyde en la soumettant à la chaleur et
- dans lequel, à la fois avant et après une introduction de la pluralité de mats de fibre de verre, disposés les uns sur les autres en forme de pile, on introduit, respectivement, au moins un mat en fibre de carbone dans le moule.

9. Procédé suivant la revendication 8,
dans lequel on porte la couche de résine époxyde, pendant une durée d'au moins deux heures, à une température de processus d'au moins 120°C.
